# EUROPEAN PATENT APPLICATION

(11) **EP 3 618 162 A1**
(43) Date of publication of application: **04.03.2020**
(21) Application number: 18790928.8
(22) Date of filing: 25.04.2018
(51) Int. Cl.: H01M 10/0562, H01B 1/06, H01B 1/08, H01M 4/13, H01M 6/18, H01M 10/052

(54) **LITHIUM ION-CONDUCTIVE CERAMIC MATERIAL, LITHIUM ION-CONDUCTIVE CERAMIC BODY, AND LITHIUM BATTERY**

(30) Priority: 26.04.2017 JP 2017086752
(71) Applicant: NGK Spark Plug Co., Ltd., Nagoya-shi, Aichi 467-8525 (JP)
(72) Inventor: TAKEUCHI Yuki, Nagoya-shi Aichi 467-8525 (JP); SHISHIHARA Daisuke, Nagoya-shi Aichi 467-8525 (JP); HIKOSAKA Hideaki, Nagoya-shi Aichi 467-8525 (JP); MIZUTANI Hidetoshi, Nagoya-shi Aichi 467-8525 (JP)
(74) Representative: Zimmermann & Partner Patentanwälte mbB
(86) International application number: PCT/JP2018/016826
(87) International publication number: WO 2018/199171

(57) **Abstract**

The purpose of the present invention is to provide a lithium ion-conductive ceramic material having high ion conductivity, and to provide a lithium battery having high capacity and high output as a result of using such a lithium ion-conductive ceramic material. Provided is a lithium ion-conductive ceramic material having a Li-containing first crystal phase where the crystal structure is a garnet-type structure or similar to a garnet-type structure and a second crystal phase containing Li, Mg, Zr, and O. In a specific region of the cross section, the ratio (L2/L1), where L1 is the total length of the line segments alternately joining successive crests and troughs in the surface of the lithium ion-conductive ceramic material and L2 is the total length of the line segments joining successive troughs only, is at least 0.95 but smaller than 1. Also provided is a lithium battery including the lithium ion-conductive ceramic material as a solid electrolyte layer or protective layer.

## Description

### Technical Field

The present invention relates to a lithium-ion-conductive ceramic material, to a lithium-ion-conductive ceramic body, and to a lithium battery.

### Background Art

In recent years, active uses of electronic apparatuses including personal computers and cellular phones as well as electrically-powered automobiles, and development in natural (renewable) energy storing technique have invoked increasing demand for high-performance batteries of a high level of safety and a long service life. In the related art, some lithium ion secondary batteries employ an organic electrolyte layer produced by dissolving a lithium salt in an organic solvent. However, such batteries having a liquid-based organic electrolyte layer have hazards, including leakage of organic solvent, flashing, and explosion, which are not preferred from safety aspects. In order to ensure a high level of safety, complete-solid batteries have been extensively developed in recent years. The complete-solid batteries employ a solid electrolyte layer instead of a liquid-base organic electrolyte layer, along with other battery elements formed of a solid.

The complete-solid batteries, having a ceramic electrolyte layer, are free from liquid leakage or flashing, ensuring high safety. Also, the complete-solid batteries may adapt a simpler casing as compared with a casing of a lithium ion secondary battery employing a liquid-base organic electrolyte layer, and whereby battery elements are stacked. The thus-realized small-scale batteries can provide an enhanced energy density per unit volume or weight. Among such complete-solid batteries, a complete-solid lithium ion secondary battery having an electrode containing metallic lithium is envisaged to realize high energy density. The complete-solid lithium ion secondary batteries must employ a solid electrolyte layer formed of a specific material which is stable to highly reactive metallic lithium. Under such circumstance, a ceramic material having a garnet-type crystal structure is a promising material for producing solid electrolyte layer having high chemical stability.

For example, Patent Document 1 discloses "a garnet-type lithium-ion-conductive oxide represented by formula Li₅₊ₓLa₃(Zrₓ,A₂₋ₓ)O₁₂ (A is one or more elements selected from the group consisting of Nb and Ta; and 1.4≦X<2)" (Patent Document 1; Claim 1). Patent Document 1 discloses that the garnet-type lithium ion conductive oxide exhibits higher conductivity as compared with a known garnet-type lithium ion conductive oxide, Li₇La₃Zr₂O₁₂, while the chemical stability and potential window are the same therebetween (Patent Document 1; e.g., [0010]).

Patent Document 2 discloses that "the ceramic material is an oxide sintered body having a garnet-type or garnet-like crystal structure which is essentially formed of Li, La, Zr, and O, in which the oxide sintered body further contains Al and Mg as an additive element." (Patent Document 2; Claim 1). Patent Document 2 discloses that the ceramic material can exhibit high density and high strength while uneven firing, cracking, formation of defects (e.g., pores) anomalous grain growth, etc. are suppressed or prevented (Patent Document 2; e.g., [0016]).

### Citation List

### Patent Document

Patent Document 1: JP-B-5083336
Patent Document 2: WO 2013/128759 A1

### Summary of Invention

### Technical Problem

Meanwhile, further improvements in capacity and output are desired for complete-solid lithium batteries. As one of the methods to provide high-capacity and high-output complete-solid lithium batteries, the internal resistance of lithium batteries may be reduced by improving ion conductivity of a solid electrolyte layer formed of, for example, a sintered body having the garnet-type structure described in Patent Documents 1 and 2, and by forming a thin protective layer disposed in a solid electrolyte layer or between the solid electrolyte layer and an electrode. For example, when grain boundaries exist in the sintered body which forms the solid electrolyte layer, the thin solid electrolyte layer may break. In addition, when the grain boundary resistance increases, the internal resistance of the lithium batteries may increase. In order to inhibit formation of the grain boundaries, a sintered body may be formed by high-temperature firing. However, in the case of the high-temperature firing, lithium is volatilized during a firing process. As a result, pores are likely to form in the sintered body, and the ion conductivity decreases. Even if a sintered body is formed by the high-temperature firing to inhibit formation of the grain boundaries in order to reduce the internal resistance of lithium batteries, the ion conductivity is decreased due to the formation of the pores. Therefore, it is impossible to provide the high-capacity and high-output lithium batteries. The inventors have attempted to improve the ion conductivity of the sintered body, thereby providing a high-capacity and high-output lithium battery.

An object of the present invention is to provide a lithium-ion-conductive ceramic material having high ion conductivity, to provide a lithium-ion-conductive ceramic body having high ion conductivity, and to provide a high-capacity and high-output lithium battery including the lithium-ion-conductive ceramic material or the lithium-ion-conductive ceramic body which has high ion conductivity.

### Solution to Problem

Means for solving the aforementioned problem is:
[1] A lithium-ion-conductive ceramic material that includes a first crystal phase containing Li and having a garnet-type or garnet-like crystal structure, and a second crystal phase containing Li, Mg, Zr, and O, in which in a predetermined area of at least one cross-section of the lithium-ion-conductive ceramic material, a ratio (L2/L1) of a total length L2 of a line segment connecting only valley points on a surface of the lithium-ion-conductive ceramic material to a total length L1 of a line segment connecting a peak point and the valley point alternately on the surface of the lithium-ion-conductive ceramic material is equal to or greater than 0.95 and smaller than 1. The lithium-ion-conductive ceramic material includes a lithium-ion-conductive ceramic sintered body (for example, bulk body having a predetermined size, granule, and powder), those obtained by solidifying the sintered body with a binder, or the like.
   Preferred embodiments of the above [1] are as follows.
[2] The lithium-ion-conductive ceramic material as described in the above [1], in which the first crystal phase contains Li, La, Zr, and Mg.
[3] The lithium-ion-conductive ceramic material as described in the above [1] or [2], in which the first crystal phase contains Li, La, Zr, Mg, and element A (the element A is at least one element selected from a group consisting of Ca, Sr, and Ba).
[4] The lithium-ion-conductive ceramic material as described in any one of the above [1] to the above [3], in which the element A is Sr.
[5] The lithium-ion-conductive ceramic material as described in any one of the above [1] to the above [4], in which the second crystal phase is contained in a cross-section of the lithium-ion-conductive ceramic material in a proportion of 10 area% or less.

Another means for solving the aforementioned problem is:
[6] A lithium-ion-conductive ceramic body that includes the lithium-ion-conductive ceramic material as described in any one of the above [1] to the above [5], and a coating layer having a thickness of 3 µm or less, which is formed on a surface of the lithium-ion-conductive ceramic material, and which contains Li, C, and O.
   Another means for solving the aforementioned problem are as follows.
[7] A lithium battery that includes the lithium-ion-conductive ceramic material as described in any one of the above [1] to the above [5], in which the lithium-ion-conductive ceramic material is a protective layer disposed in a solid electrolyte layer or between a solid electrolyte layer and an electrode.
[8] A lithium battery that includes the lithium-ion-conductive ceramic body as described in the above [6], in which the lithium-ion-conductive ceramic body is a protective layer disposed in a solid electrolyte layer or between a solid electrolyte layer and an electrode.

### Advantageous Effects of Invention

Since the lithium-ion-conductive ceramic material of the present invention includes the first crystal phase containing Li and having a garnet-type or garnet-like crystal structure, and the second crystal phase containing Li, Mg, Zr, and O, the lithium-ion-conductive ceramic material of the present invention exhibits higher ion conductivity, as compared with a ceramic material containing a first crystal phase and no second crystal phase. A conceivable reason why the lithium-ion-conductive ceramic material of the present invention exhibits high ion conductivity by virtue of the presence of the second crystal phase will next be described. Firstly, since the lithium-ion-conductive ceramic material has an Li-containing second crystal phase, Li atoms contained in the second crystal phase preferentially become volatile during firing, and the Li content of the highly ion conductive first crystal phase is maintained at a constant level, and whereby a consistent ion conductivity can be attained. In addition, a part of the second crystal phase is present in the pores provided in the first crystal phase, and the large-scale pores are filled with the second crystal phase. As a result, mobility of Li ions is enhanced, to attain increased ion conductivity. Therefore, the present invention enables provision of a lithium-ion-conductive ceramic material having high ion conductivity.

According to the lithium-ion-conductive ceramic material of the present invention, in a predetermined area of at least one cross-section of the lithium-ion-conductive ceramic material, the ratio (L2/L1) of the total length L2 of a line segment connecting only the valley points to the total length L1 of a line segment connecting the peak point and the valley point alternately on a surface of the lithium-ion-conductive ceramic material is equal to or greater than 0.95 and smaller than 1. The fact that the above ratio (L2/L1) is equal to or greater than 0.95 and smaller than 1 means that the surface of the lithium-ion-conductive ceramic material is not completely flat, but has a shape with relatively few uneven parts. Therefore, according to the lithium-ion-conductive ceramic material of the present invention, the lithium-ion-conductive ceramic material can be in good contact with other members, and lithium ion conductivity between the lithium-ion-conductive ceramic material and other members can be improved.

The lithium-ion-conductive ceramic body of the present invention includes the lithium-ion-conductive ceramic material, and the coating layer having a thickness of 3 µm or less, which is formed on a surface of the lithium-ion-conductive ceramic material, and which contains Li, C, and O. When the lithium-ion-conductive ceramic material is exposed to the atmosphere, a coating layer containing Li, C, and O may be formed on a surface of the lithium-ion-conductive ceramic material. The coating layer, which contains Li, C, and O, exhibits very low lithium ion conductivity. In the lithium-ion-conductive ceramic body of the present invention, the thickness of the coating layer having very low lithium ion conductivity is set to 3 µm or smaller, so that a decrease in lithium ion conductivity of the lithium-ion-conductive ceramic body due to the presence of the coating layer can be inhibited.

The lithium battery of the present invention includes the lithium-ion-conductive ceramic material or lithium-ion-conductive ceramic body exhibiting high ion conductivity, which serves as a protective layer disposed in the solid electrolyte layer or between the solid electrolyte layer and the electrode, so that the internal resistance of the lithium battery can be reduced. As a result, the lithium battery of the present invention enables provision of a lithium battery having high capacity and high output.

### Brief Description of Drawings

[Fig. 1] Fig. 1 schematically shows a cross-section of a structure of a lithium-ion-conductive ceramic body according to the present invention.
[Fig. 2] Fig. 2 is a cross-section of a complete-solid battery, which schematically shows an embodiment of the lithium battery according to the present invention.
[Fig. 3] Fig. 3 is a cross-section of a complete-solid battery, which schematically shows another embodiment of the lithium battery according to the present invention.
[Fig. 4] Fig. 4(a) is an SEM image of a polished surface of sample 1. Fig. 4(b) is an SEM image of a polished surface of sample 2. Fig. 4(c) is an SEM image of a polished surface of sample 3. Fig. 4(d) is an SEM image of a polished surface of sample 4. Fig. 4(e) is an SEM image of a polished surface of sample 5.
[Fig. 5] Fig. 5 shows X-ray diffraction patterns of samples 1 to 5, obtained through XRD analysis.
[Fig. 6] Fig. 6 is an illustrative diagram showing a method for identifying a peak point MP and a valley point VP on a surface of a lithium-ion-conductive ceramic sintered body 110.

### Description of Embodiments

### (Lithium-ion-conductive ceramic sintered body)

First, an embodiment of the lithium-ion-conductive ceramic sintered body according to the present invention will be described. The lithium-ion-conductive ceramic sintered body according to the present invention has a first crystal phase containing Li and having a garnet-type or garnet-like crystal structure, and a second crystal phase containing Li, Mg, Zr, and O. The lithium-ion-conductive ceramic sintered body exhibits higher ion conductivity, as compared with a ceramic sintered body formed from a similar ceramic material including the first crystal phase but no second crystal phase.

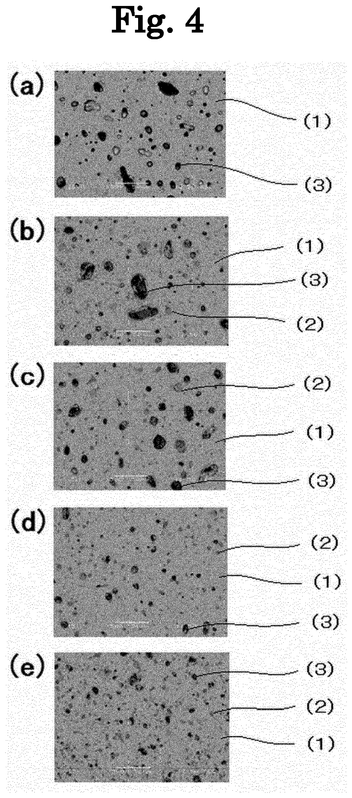

The reason why the lithium-ion-conductive ceramic sintered body according to the present invention exhibits higher ion conductivity, as compared with a ceramic sintered body formed from a similar ceramic material including the first crystal phase but no second crystal phase, has not been clearly elucidated. However, the present inventors may provide the following conceivable mechanism. Specifically, during firing to form the lithium-ion-conductive ceramic sintered body, Li contained in the second crystal phase preferentially become volatile, and whereby the Li content of the first crystal phase, which is a phase having high ion conductivity, can be controlled to a constant level. Thus, consistent ion conductivity may be attained. Also, as shown in Fig. 4(d), a part of the second crystal phase is present in pores of the first crystal phase. Since a large space of the pores is filled with the second crystal phase, Li ion mobility is enhanced, resulting in enhanced ion conductivity. Therefore, the lithium-ion-conductive ceramic sintered body in which the first crystal phase and the second crystal phase are generated exhibits high ion conductivity.

The first crystal phase is formed of a metal oxide which essentially contains Li and has a garnet-type or garnet-like crystal structure. One example of the first crystal phase is a crystalline oxide which contains Li, La, Zr, and O, which has a garnet-type or garnet-like crystal structure, and which is represented by formula (I): Li₇La₃Zr₂O₁₂ (hereinafter may be referred to also as LLZ). The crystalline oxide includes sites where Li is placed (called Li sites), sites where La is placed (called La sites), and sites where Zr is placed (called Zr sites).

In the crystalline compound represented by formula (I), Li atoms are essentially placed in the Li sites, and a part of the Li atoms are preferably substituted with Mg. No particular limitation is imposed on the percent substitution with element Mg, but 0 to 0.273 Li atoms are preferably substituted with Mg, in which the number of all atoms in the Li sites (the total number of the number of Li atoms and that of Mg atoms) is defined as 1. Since the ion radius of Li is almost equivalent to that of Mg, Mg is thought to be readily substituted with Li in the Li sites. When the first crystal phase contains Li, La, Zr, and Mg and has a garnet-type or garnet-like crystal structure, the provided lithium-ion-conductive ceramic sintered body exhibits higher ion conductivity. Notably, Mg is preferably placed in Li sites from the viewpoint of attaining enhanced ion conductivity. However, no particular limitation is imposed on the mode of presence of Mg, and Mg may be present in the crystal structure as an interstitial mode, and/or as a separate phase at a crystal grain boundary or the like.

In the crystalline compound represented by formula (I), preferably, La atoms are essentially placed in the La sites, and a part of the La atoms are substituted with element A (the element A is at least one element selected from a group consisting of Ca, Sr, and Ba). No particular limitation is imposed on the percent substitution with element A, but 0 to 0.667 La atoms are preferably substituted with element A atoms, in which the number of all atoms in the La sites (the total number of the number of La atoms and that of element A atoms) is defined as 1. Ca, Sr and Ba are group 2 elements defined in the relevant periodic table, and readily form divalent cations. These elements have almost the same ion radius. Since the ion radius of each of Ca, Sr, and Ba is almost the same as that of La, La elements present in the La sites are thought to be readily substituted with Ca, Sr, or Ba. Among Ca, Sr and Ba, partial substitution of La with Sr is preferred, from the viewpoint of attaining high ion conductivity. When the first crystal phase contains Li, La, Zr, and element A (particularly Li, La, Zr, Mg, and element A) and has a garnet-type or garnet-like crystal structure, the provided lithium-ion-conductive ceramic sintered body exhibits higher ion conductivity. Notably, element A is preferably placed in La sites from the viewpoint of attaining enhanced ion conductivity. However, no particular limitation is imposed on the mode of presence of element A, and element A may be present in the crystal structure as an interstitial mode, and/or as a separate phase at a crystal grain boundary or the like. Alternatively, a part of La atoms may also be substituted with elements other than element A, for example, at least one element selected from among K, Y, Pr, Nd, Sm, Gd, and Lu.

In the crystalline compound represented by formula (I), Zr atoms are essentially placed in the Zr sites, and a part of the Zr atoms may be substituted with element B (the element B is at least one element selected from a group consisting of Sc, Ti, V, Ga, Y, Nb, In, Sn, Hf, Ta, W, Pb, Bi, Si, Ge, Sb, and Te).

The second crystal phase is a crystalline metal oxide containing at least Li, Mg, Zr, and O. Preferably, the second crystal phase is formed such that the second crystal phase is dispersed in the first crystal phase serving as a main crystal phase and fills the pores present in the first crystal phase. Through formation of the second crystal phase so as to fill the pores in the first crystal phase, a provided lithium-ion-conductive ceramic sintered body exhibits higher ion conductivity. Also, since the lithium-ion-conductive ceramic sintered body has an Li-containing second crystal phase, Li atoms contained in the second crystal phase preferentially become volatile during firing, and the Li content of the highly ion conductive first crystal phase is maintained at a constant level, and whereby consistent ion conductivity can be attained.

Whether or not the lithium-ion-conductive ceramic sintered body includes a first crystal phase having a garnet-type or garnet-like crystal structure may be determined through an analysis of a powder obtained by crushing the lithium-ion-conductive ceramic sintered body, by means of an X-ray diffractometer (XRD). Specifically, the relevant lithium-ion-conductive ceramic sintered body is crushed, and the thus-obtained powder is analyzed by means of an X-ray diffractometer (XRD), thereby obtaining an X-ray diffraction pattern. Through comparison of the thus-obtained X-ray diffraction pattern with a corresponding chart disclosed in the corresponding ICDD (International Center for Diffraction Data) card, the substance contained in the lithium-ion-conductive ceramic sintered body is identified. For example, in the case where the first crystal phase is assumed to be a crystalline compound represented by formula (I), comparison of an X-ray diffraction pattern is conducted with reference to an ICDD card (01-080-4947) (Li₇La₃Zr₂O₁₂), corresponding to LLZ. In a certain case, the first crystal phase of LLZ may be partially substituted with another element, and the diffraction angle and relative diffraction peak intensities of diffraction peaks may slightly vary from those shown in the ICDD card corresponding to LLZ. However, if the observed X-ray diffraction pattern generally coincides with the diffraction angle and relative diffraction peak intensities of diffraction peaks shown in the ICDD card corresponding to LLZ, the first crystal phase can be determined to have a garnet-like crystal structure.

The elements contained in the first crystal phase and second crystal phase may be identified through the following procedure. Firstly, a lithium-ion-conductive ceramic sintered body is cut to expose a cut surface, and the cut surface is polished to provide a polished surface. The main crystal phase having the largest area observed in the cut surface is employed as the first crystal phase. The main crystal phase is subjected to an element analysis by means of an energy dispersive X-ray spectrometer (EDS) attached to a scanning electron microscope (SEM) or a transmission electron microscope (TEM), and whereby the species of elements contained in the first crystal phase are determined. Regarding the second crystal phase, particles dispersed in the main crystal phase are defined to form the second crystal phase. Through element analysis of the particles by means of an EDS, the species of elements contained in the second crystal phase are determined. Meanwhile, Li cannot be detected through SEM-EDS or TEM-EDS. In the case of Li, the polished surface is subjected to a Li mapping analysis through time-of-flight secondary ion mass spectrometry (TOF-SIMS), thereby confirming whether or not the first crystal phase or the second crystal phase contains Li. Also, the crystalline nature of the second crystal phase can be determined with reference to an SEM or TEM electron-beam diffraction pattern of the particles which have been subjected to element analysis through EDS.

The lithium-ion-conductive ceramic sintered body preferably includes the second crystal phase in a proportion of 0.5 area% to 10 area%, as determined in a cross section of the lithium-ion-conductive ceramic sintered body, more preferably in a proportion of 0.5 area% to 5 area%, and still more preferably in a proportion of 0.5 area% to 3 area%. When the second crystal phase content falls within the above ranges, volatilization of Li in the first crystal phase is prevented by volatilization of Li atoms preferentially from the second crystal phase during firing. In addition, since the pores in the first crystal phase are filled with the second crystal phase, the provided lithium-ion-conductive ceramic sintered body exhibits higher ion conductivity. When the area ratio of the second crystal phase is excessively small, difficulty is encountered in attaining the effect of enhancing ion conductivity, whereas when the area ratio of the second crystal phase is excessively large, the relative amount of the highly ion-conductive first crystal phase decreases, and ion conductivity may decrease.

The area ratio of the second crystal phase of the lithium-ion-conductive ceramic sintered body may be determined through the following procedure. Firstly, a polished surface is provided in a manner similar to that employed in the aforementioned EDS analysis. A plurality of arbitrarily chosen sites of the polished surface are observed under an SEM. Images are taken at such a magnification that a plurality of second crystal phase grains can be identified (e.g., ×1,000). Straight lines are drawn such that the lines thoroughly surround the contour of each of the second crystal phase particles identified by the SEM image, and minimize the area of the particle in the SEM image. The area defined by the straight lines is employed as an area of a second crystal phase particle, and the total area of the second crystal phase particles in the SEM image is determined. Next, the total area of the SEM image is determined. Then, the ratio of the total area of the second crystal phase to the total area of the image is calculated.

The lithium-ion-conductive ceramic sintered body preferably has high density. More specifically, the relative density of the lithium-ion-conductive ceramic sintered body is preferably 80% or higher, with respect to the theoretical density, and more preferably 90% or higher. When the lithium-ion-conductive ceramic sintered body has a relative density of 80% or higher, particularly 90% or higher, a solid electrolyte layer having a small thickness can be formed from the lithium-ion-conductive ceramic sintered body. In this case, the functions of the solid electrolyte layer can be satisfied, since short circuit between the cathode layer and the anode layer therein is prevented. As a result, the internal resistance of the lithium battery produced therefrom can be reduced.

The relative density may be determined through the following procedure. Firstly, the mass of a target lithium-ion-conductive ceramic sintered body in a dry state is measured by means of, for example, an electronic balance, and the volume of the sintered body is determined by means of vernier calipers. The thus-measured dry mass is divided by the volume to calculate the density of the sintered body. Separately, the theoretical density of the lithium-ion-conductive ceramic sintered body is calculated. Then, the relative density (%) may be derived by dividing the determined density (×100) by the theoretical density.

The lithium-ion-conductive ceramic sintered body preferably has ion conductivity, at room temperature, of 1 × 10⁻⁴ S/cm or higher, more preferably 1 × 10⁻³ S/cm or higher. When the ion conductivity of the lithium-ion-conductive ceramic sintered body is 1 × 10⁻⁴ S/cm or higher, particularly 1 × 10⁻³ S/cm or higher, the lithium battery having a solid electrolyte layer formed of the lithium-ion-conductive ceramic sintered body can exhibit reduced internal resistance, and high capacity and high output.

The ion conductivity may be determined in the following manner. Firstly, each main surface of a sintered body is polished, and the polished surface is coated with gold. Then, the specific resistance of the lithium-ion-conductive ceramic sintered body is measured at room temperature through the AC impedance method. The ion conductivity is the reciprocal of the specific resistance.

No particular limitation is imposed on the form of the lithium-ion-conductive ceramic sintered body, and the sintered body may be in the form of a bulk body having predetermined dimensions, granule, powder, or the like. In the case where the lithium-ion-conductive ceramic sintered body is a bulk body, no particular limitation is imposed on the form of the bulk body, and examples thereof include pellet, thin sheet, and thin film. In the case where the lithium-ion-conductive ceramic sintered body is employed as the below-described solid electrolyte layer 11 or protective layer 216 or 217, the sintered body is generally in the form of thin sheet. In the case where the sintered body is used as a solid electrolyte contained in the cathode layer 12 and the anode layer 13, the cathode layer 12 and the anode layer 13 are generally produced by mixing a powder-form material of the lithium-ion-conductive ceramic sintered body and an electrode material such as a cathode active substance or an anode active substance.

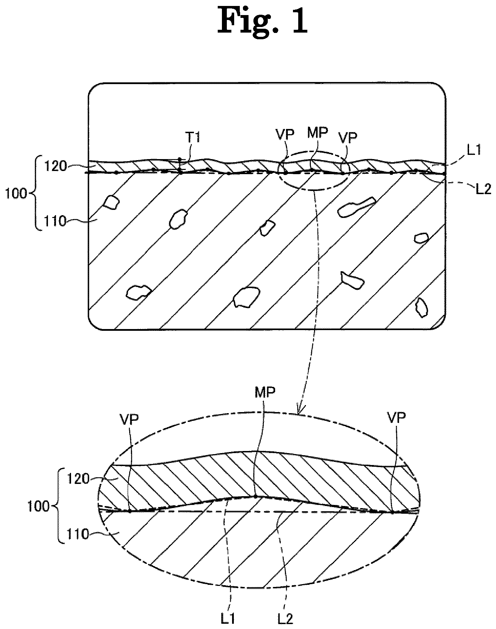

As shown in Fig. 1, when a lithium-ion-conductive ceramic sintered body 110 is exposed to the atmosphere, a coating layer 120 containing Li, C, and O (e.g., layer of lithium carbonate (Li₂CO₃)) may be formed on a surface of the lithium-ion-conductive ceramic sintered body 110. In the present specification, a structure including the lithium-ion-conductive ceramic sintered body 110 and the coating layer 120 is referred to as a lithium-ion-conductive ceramic body 100. The thickness T1 of the coating layer 120 in the lithium-ion-conductive ceramic body 100 is preferably 3 µm or smaller. The coating layer 120 containing Li, C, and O exhibits very low lithium ion conductivity. Therefore, when the thickness T1 of the coating layer 120 is set as 3 µm or smaller, a decrease in lithium ion conductivity of the lithium-ion-conductive ceramic body 100 due to the presence of the coating layer 120 can be inhibited. The thickness T1 of the coating layer 120 is preferably 2 µm or smaller, more preferably 1 µm or smaller, and still more preferably 0.5 µm or smaller. Also, the thickness T1 of the coating layer 120 may be 0.01 µm or greater.

When a peak point MP and a valley point VP on a surface of the lithium-ion-conductive ceramic sintered body 110 are identified in a predetermined area (for example, an image area (×3000) obtained by means of scanning electron microscope (SEM)) of at least one cross-section of the lithium-ion-conductive ceramic body 100, a ratio (L2/L1) of a total length L2 of a line segment connecting only valley points VP on the surface of the lithium-ion-conductive ceramic sintered body 110 to a total length L1 of a line segment connecting the peak point MP and the valley point VP alternately on the surface of the lithium-ion-conductive ceramic sintered body 110 is preferably equal to or greater than 0.95 and smaller than 1. Here, the peak point MP is a vertex of a local protruding part on the surface of the lithium-ion-conductive ceramic sintered body 110, and the valley point VP is a bottom point of a local recessed part in the surface. The fact that the above ratio (L2/L1) is equal to or greater than 0.95 and smaller than 1 means that the surface of the lithium-ion-conductive ceramic sintered body 110 is not completely flat, but has a shape with relatively few uneven parts. Therefore, if the above ratio (L2/L1) is equal to or greater than 0.95 and smaller than 1, the lithium-ion-conductive ceramic body 100 can be in good contact with other members, and lithium ion conductivity between the lithium-ion-conductive ceramic body 100 and other members can be improved. For example, when the lithium-ion-conductive ceramic body 100 is employed as the below-described solid electrolyte layer 11, the lithium ion conductivity between the solid electrolyte layer 11 and an electrode can be improved.

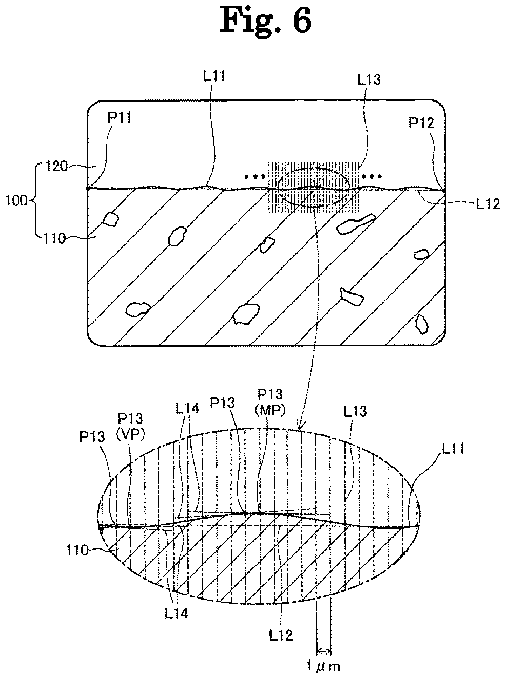

The identification of the peak point MP and the valley point VP on the surface of the lithium-ion-conductive ceramic sintered body 110 is conducted in the following manner. Fig. 6 is an illustrative diagram showing a method for identifying a peak point MP and a valley point VP on a surface of the lithium-ion-conductive ceramic sintered body 110. As shown in Fig. 6, in a predetermined area (for example, an image area (×3000) obtained by means of scanning electron microscope (SEM)) of one cross-section of the lithium-ion-conductive ceramic body 100, a straight line (hereinafter, called "reference line") is drawn, which connects two end points P11 and P12 of a line representing the surface of the lithium-ion-conductive ceramic sintered body 110 (hereinafter, called "surface line"). Next, a plurality of straight lines L13 (hereinafter, called "dividing lines") which are perpendicular to the reference line L12 are drawn at intervals of 1 µm. Next, tangent lines L14 of the surface line L11 are drawn, in which each intersection point P13 between each dividing line L13 and the surface line L11 is set as a tangent point. When the surface of the lithium-ion-conductive ceramic sintered body 110 is directed upward on the image, as inclination of the tangent lines L14 relative to the reference line L12 is viewed in a forward direction (direction from left to right) of a horizontal axis, a tangent point P13 when the inclination of the tangent line L14 changes from a positive value to 0 or smaller is defined as the peak point MP, and a tangent point P13 when the inclination of the tangent line L14 changes from a negative value to 0 or greater is defined as the valley point VP.

The lithium-ion-conductive ceramic sintered body or the lithium-ion-conductive ceramic body according to the present invention, which exhibits high ion conductivity, can be suitably employed as a material of various members of a lithium battery. Examples of the material of lithium battery members include materials of a cathode layer, an anode layer, a solid electrolyte layer, and a protective layer disposed between the solid electrolyte layer and the cathode layer or the anode layer.

The present invention is not limited to the lithium-ion-conductive ceramic sintered body, and may be applied to general lithium-ion-conductive ceramic materials (including lithium ion conductive ceramic sintered bodies or those obtained by solidifying the sintered body with a binder, etc.).

### (Lithium-ion-conductive ceramic sintered body production method)

Next, an embodiment of a method of producing the lithium-ion-conductive ceramic sintered body according to the present invention will be described. Hereinafter, a case where the lithium-ion-conductive ceramic sintered body according to the present invention is produced as a bulk body will be described. The lithium-ion-conductive ceramic sintered body production method includes a mixing step of mixing raw materials, to thereby provide a material mixture, and a firing step of firing the obtained material mixture.

In the mixing step, a material mixture may be prepared by mixing materials which contain, for example, Li, Mg, and M_{L} (the element M_{L} represents La or La and at least one element selected from the group consisting of K, Ca, Sr, Y, Ba, Pr, Nd, Sm, Gd, and Lu) and element Mz (the element Mz represents Zr or Zr and at least one element selected from the group consisting of Sc, Ti, V, Ga, Y, Nb, In, Sn, Hf, Ta, W, Pb, Bi, Si, Ge, Sb, and Te) as raw materials, in which the proportions of the elements Li, Mg, and Zr are adjusted to exceed the theoretical proportions of the corresponding crystalline oxide having a garnet-type crystal structure. The theoretical compositional proportions are those of the corresponding crystalline oxide having a garnet-type crystal structure to be yielded as a sintered body. An example of the theoretical compositional proportions of the crystalline oxide having a garnet-type crystal structure is basically LLZ represented by formula (I), in which at least Li among Li, La, and Zr is partially substituted with Mg, and La or Zr is optionally substituted with another element. Such a composition may be represented by formula (I): Li_{7-2α}Mg_{α}M_{L3}M_{Z2}O₁₂ (0<α≦1.5). In the composition represented by formula (II), La is preferably substituted with another element at a specific substitution ratio, from the viewpoints of facilitating formation of a crystalline oxide having a garnet-type crystal structure and attaining high ion conductivity. Alternatively, Zr may be substituted with another element at a specific substitution ratio. In other words, the composition is preferably represented by formula (III): Li_{δ}Mg_{α}La_{3-β}A2_{β}Z_{2-γ}B_{γ}O₁₂ (0<α≦1.5, 0<β≦2, 0<γ≦1, and 5.5≦δ≦9), in which element A2 represents an M_{L} element other than La, and element B represents an Mz element other than Zr. Preferably, with respect to 1 mol of the composition represented by formula (II) or (III), Li is incorporated at an excess of 0 to 15 mol%, Mg is incorporated at an excess of 1 to 20 mol%, and Zr is incorporated at an excess of 1 to 20 mol%. Regarding Mg and Zr, more preferably, Mg is incorporated at an excess of 1 to 10 mol%, and Zr is incorporated at an excess of 1 to 10 mol%. Firing a material mixture containing Li, Mg, and Zr in excessive amounts falling within the aforementioned range can facilitate formation of a lithium-ion-conductive ceramic sintered body including a first crystal phase (a main crystal phase) which contains Li and which has a garnet-type or garnet-like crystal structure, and a second crystal phase which contains Li, Mg, Zr, and O in appropriate amounts. As a result, high ion conductivity can be attained. Notably, the method for depositing the second crystal layer is not limited to the above method, and other methods may be adopted.

No particular limitation is imposed on the raw material containing the aforementioned components, so long as the material can be converted to the corresponding components via firing. Examples of the raw material include an oxide, a complex oxide, a hydroxide, a carbonate, a chloride, a sulfate, a nitrate, and a phosphate, which contain Li, Mg, and components of element M_{L} and element Mz. Specific examples the powder-form material containing any of the aforementioned components include Li₂O, LiOH, Li₂CO₃, MgO, MgCO₃, La₂O₃, La(OH)₃, ZrO₂, CaO, CaCO₃, SrO, SrCO₃, BaO, and BaCO₃. The material containing any of the aforementioned components may or may not contain an oxygen (O) component. In the case where the material containing any of the aforementioned components contains no oxygen (O) component, a lithium-ion-conductive ceramic sintered body having a first crystal phase and a second crystal phase can be produced through performing the below-described firing step in an appropriate firing atmosphere such as an oxidizing atmosphere.

The material mixture may be prepared appropriately through a known method for preparing a raw powder material which method is employed in synthesis of ceramics. In one specific procedure, materials containing the aforementioned components are put into a pot made of Nylon with zirconia balls, and the mixture is pulverized by means of a ball mill with an organic solvent for 8 to 20 hours. The product is dried to yield a material mixture. Examples of the organic solvent include alcohols such as ethanol and butanol, and acetone.

Before the firing step, a step of calcining the material mixture is preferably performed. In one mode of the calcining step, the material mixture is placed on an MgO plate and calcined at 900 to 1,100°C for 2 to 15 hours to yield a calcined material. Through the calcining step, a sintered body having a garnet-type or garnet-like crystal structure can be readily produced by the sintering step.

Before the firing step, a step of adding a binder to the calcined material and subjecting the mixture to pulverization is preferably performed. In one mode of the step, a binder is added to the calcined material, and the mixture is pulverized in an organic solvent for 8 to 100 hours by means of a ball mill. The product is dried to yield an unfired material. Through further pulverizing the calcined material, a uniform crystal phase can be readily obtained by the sintering step. Examples of the binder include methylcellulose, ethylcellulose, polyvinyl alcohol, and polyvinyl butyral. Examples of the organic solvent include ethanol, butanol, and acetone.

In the firing step, the material mixture obtained through the mixing step is fired. In a specific procedure, the material mixture is put into a metal mold having a shape and dimensions of interest and press-molded. For example, the mixture is pressed at isostatic pressure of 1 to 2 t/cm² by means of a cold isostatic pressing (CIP) machine, to form a compact. The compact is fired at 1,000 to 1,250°C for 3 to 36 hours, to thereby yield a lithium-ion-conductive ceramic sintered body.

When the material mixture contains no oxygen component, the compact is preferably fired in an oxygen-containing atmosphere. When the material mixture contains an oxygen component, the compact may be fired in an inert gas atmosphere (e.g., under nitrogen) or a reducing atmosphere. Notably, in the case where the calcining step is performed after the mixing step, the calcined material is subjected to the firing step. Also, in the case where the binder-addition and pulverization step is performed after the mixing step, the unfired material is subjected to the firing step.

According to the lithium-ion-conductive ceramic sintered body production method, the lithium-ion-conductive ceramic sintered body having a first crystal phase and a second crystal phase can be easily produced. The lithium-ion-conductive ceramic sintered body as it is or appropriately processed may be used as a solid electrolyte layer or a protective layer of the below-mentioned lithium battery.

In the case where the lithium-ion-conductive ceramic sintered body is employed as a solid electrolyte contained in the cathode layer and the anode layer, the material mixture is not subjected to press-forming in the firing step, and, instead, the mixture in the powder form is fired, to thereby yield a lithium-ion-conductive ceramic sintered body.

In the method of producing the lithium-ion-conductive ceramic sintered body, a step of polishing a surface of the lithium-ion-conductive ceramic sintered body (lithium-ion-conductive ceramic body (that is, a structure including the lithium-ion-conductive ceramic sintered body and the coating layer 120 formed on the surface thereof)) with abrasive papers may be performed after the firing step. Through the polishing step, the ratio (L2/L1) of the total length L2 of a line segment connecting only the valley points VP on the surface of the lithium-ion-conductive ceramic sintered body 110 to the total length L1 of a line segment connecting the peak point MP and the valley point VP alternately on the surface of the lithium-ion-conductive ceramic sintered body 110 can be a value equal to or greater than 0.95 and smaller than 1. In addition, even if the surface of the lithium-ion-conductive ceramic sintered body after being polished is exposed to the atmosphere, the thickness T1 of the coating layer 120 described above can be reduced to 3 µm or less. Also, the surface of the lithium-ion-conductive ceramic sintered body can be formed into a shape (an almost flat shape) having relatively few uneven parts, and the coating layer 120 having a uniform thickness can be obtained.

### (Lithium battery of first embodiment)

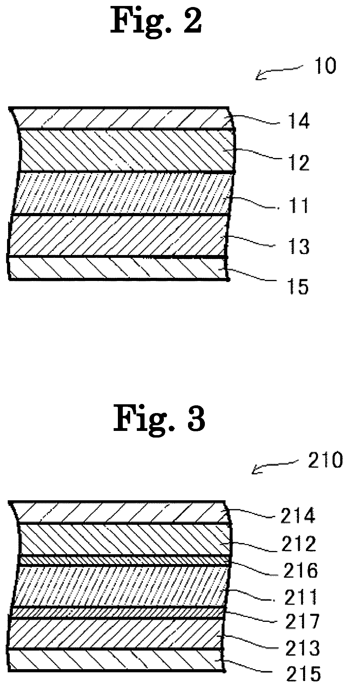

A complete-solid battery, which is a first embodiment of the lithium battery according to the present invention, will next be described with reference to the drawings. Fig. 2 is a cross-section of a complete-solid battery, which schematically shows an embodiment of the lithium battery according to the present invention.

A complete-solid battery 10 is a lithium ion battery in which all the constituting members are formed of a solid, and has a solid electrolyte layer 11, a cathode layer 12, an anode layer 13, a first collector member 14, and a second collector member 15. The lithium-ion-conductive ceramic sintered body according to the present invention (the lithium-ion-conductive ceramic material, or the lithium-ion-conductive ceramic body, the same applies to the following) is contained in at least one of the solid electrolyte layer 11, the cathode layer 12, and the anode layer 13.

No particular limitation is imposed on the material of the solid electrolyte layer 11, and a material exhibiting lithium ion conductivity may be used. Examples of the material of forming the solid electrolyte layer 11 include the lithium-ion-conductive ceramic sintered body according to the present invention, a NASICON-type lithium aluminum titanium phosphate complex oxide (e.g., Li(Al,Ti)₂(PO4)₃ (referred to as LATP)), a lithium aluminum germanium phosphate complex oxide (e.g., Li(Al,Ge)₂(PO4)₃ (referred to as LAGP)), and a perovskite-type lithium lanthanum titanium complex oxide (e.g., La_{2/3-x}Li₃ₓTiO₃ (referred to as LLT)). Of these, the solid electrolyte layer 11 is preferably formed of the lithium-ion-conductive ceramic sintered body according to the present invention. The lithium-ion-conductive ceramic sintered body according to the present invention is stable with respect to metallic lithium. Thus, in the case where the cathode layer 12 or the anode layer 13 contains a lithium component, when the solid electrolyte layer 11 is formed of the lithium-ion-conductive ceramic sintered body according to the present invention, redox-induced deterioration of the solid electrolyte layer 11 can be suppressed. Furthermore, the lithium-ion-conductive ceramic sintered body according to the present invention, which exhibits high ion conductivity, can provide the complete-solid battery 10 with high capacity and high output.

The cathode layer 12 is disposed on one main surface of the solid electrolyte layer 11, and the anode layer 13 is disposed on the other main surface of the solid electrolyte layer 11 (hereinafter, each electrode may be referred to simply as electrode).

The cathode layer 12 is formed from a cathode active material and a material containing a solid electrolyte. No particular limitation is imposed on the cathode active material, and examples thereof include sulfur, TiS₂, LiCoO₂/LiMn₂O₄, and LiFePO₄. No particular limitation is imposed on the solid electrolyte contained in the cathode layer 12, so long as the material exhibits lithium ion conductivity. Examples of the solid electrolyte include the lithium-ion-conductive ceramic sintered body according to the present invention and the like, which are the aforementioned materials of forming the solid electrolyte layer 11. Notably, in the case where the cathode active material has no electron conductivity, the cathode layer 12 may contain a conducting aid in addition to the cathode active material and the solid electrolyte. No particular limitation is imposed on the material of the conducting aid, so long as the material exhibits electron conductivity. Examples of the conducting aid include conductive carbon, nickel (Ni), platinum (Pt), and silver (Ag).

The anode layer 13 is formed from an anode active material and a material containing a solid electrolyte. No particular limitation is imposed on the anode active material, and examples thereof include metallic Li, lithium-aluminum alloy (Li-Al alloy), Li₄Ti₅O₁₂, carbon, silicon (Si), and silicon monoxide (SiO). No particular limitation is imposed on the material of the solid electrolyte contained in the anode layer 13, so long as the material exhibits lithium ion conductivity. Examples of the solid electrolyte include the lithium-ion-conductive ceramic sintered body according to the present invention and the like, which are the aforementioned materials of forming the solid electrolyte layer 11. Notably, in the case where the anode active material has no electron conductivity, the anode layer 13 may contain a conducting aid, in addition to the anode active material and the solid electrolyte. No particular limitation is imposed on the material of the conducting aid, so long as the material exhibits electron conductivity. Examples of the conducting aid include conductive carbon, nickel (Ni), platinum (Pt), and silver (Ag).

In at least one member of the cathode layer 12 and the anode layer 13, the lithium-ion-conductive ceramic sintered body according to the present invention may be used as a solid electrolyte. In this case, the lithium-ion-conductive ceramic sintered body according to the present invention attains high ion conductivity, and whereby the complete-solid battery 10 exhibiting high capacity and high output can be provided.

The first collector member 14 is disposed on the surface of the cathode layer 12 opposite the surface on which the solid electrolyte layer 11 is disposed. The second collector member 15 is disposed on the surface of the anode layer 13 opposite the surface on which the solid electrolyte layer 11 is disposed. The first collector member 14 and the second collector member 15 are conductive members, which are formed of a conductive metallic material such as stainless steel (SUS), nickel (Ni), titanium (Ti), iron (Fe), copper (Cu), aluminum (Al), an alloy thereof, a carbon material, or the like.

The complete-solid battery 10 has the solid electrolyte layer 11,the cathode layer 12, and the anode layer 13, at least one of which is provided so as to contain the lithium-ion-conductive ceramic sintered body according to the present invention. The lithium-ion-conductive ceramic sintered body according to the present invention exhibits high ion conductivity, and whereby the complete-solid battery 10 exhibits high capacity and high output.

Next, an embodiment of the method of producing the complete-solid battery 10 will be described.

The solid electrolyte layer 11 may be appropriately produced through a known ceramic compact production method. Also, in the case where the solid electrolyte layer 11 is formed of the lithium-ion-conductive ceramic sintered body according to the present invention, the layer may be produced by the same production method of the lithium-ion-conductive ceramic sintered body.

The cathode layer 12 and the anode layer 13 may be produced appropriately through a known method for producing a ceramic compact. In one specific procedure, the aforementioned cathode active material, a solid electrolyte, and an optional powder of a compound serving as a conducting aid are mixed at predetermined proportions, to prepare a powder mixture. In the case where the lithium-ion-conductive ceramic sintered body according to the present invention is used as a solid electrolyte, a lithium-ion-conductive ceramic sintered body is fired to form a powder by the aforementioned lithium-ion-conductive ceramic sintered body production method. Then, the powder is optionally subjected to pulverization or the like, to adjust the particle size of the powder. The resultant powder is mixed with a cathode active material or the like, to provide a powder mixture.

Subsequently, the powder mixture is placed in a cylindrical vessel for conducting press molding. Specifically, an SUS substrate material serving as the first collector member 14 and the powder mixture are sequentially stacked in the cylindrical vessel, and the stacked body is press-molded, to form a cathode pellet. An anode pellet is formed through the same procedure.

Then, the cathode pellet, the solid electrolyte layer, and the anode pellet are stacked in this order such that the collector members 14,15 of the cathode pellet and the anode pellet are placed as outermost layers, to prepare a stacked body. Next, the stacked body is pressed at a specific pressure by the mediation of the first collector member 14 and the second collector member 15 in a sandwich manner, to bond the component layers. As a result, the complete-solid battery 10 is fabricated.

Notably, the complete-solid battery 10 may be produced through a method other than the aforementioned procedure. Examples of such a production method include simultaneously firing the electrodes 12,13 and the solid electrolyte layer 11; baking the electrodes 12,13 to bond to the fired solid electrolyte layer 11 in the form of plate; and baking, under pressing, the electrodes 12,13 to bond to the fired solid electrolyte layer 11 in the form of plate (i.e., a hot-press method).

### (Lithium battery of second embodiment)

A complete-solid battery, which is a second embodiment of the lithium battery according to the present invention, will next be described with reference to the drawings. Fig. 3 is a cross-section of a complete-solid battery, which schematically shows an embodiment of the lithium battery according to the present invention. Except for the following description, a complete-solid battery 210 of the second embodiment has the same configuration as that of the complete-solid battery 10 of the first embodiment.

The complete-solid battery 210 of the second embodiment has a first protective layer 216 disposed between a solid electrolyte layer 211 and a cathode layer 212, and a second protective layer 217 disposed between the solid electrolyte layer 211 and an anode layer 213 (hereinafter these protective layers may be referred to simply as a "protective layer"). That is, in the complete-solid battery 210, a first collector member 214, the cathode layer 212, the first protective layer 216, the solid electrolyte layer 211,the second protective layer 217, the anode layer 213, and a second collector member 215 are stacked in this order.

Each of the first protective layer 216 and the second protective layer 217 is formed of the lithium-ion-conductive ceramic sintered body according to the present invention. The lithium-ion-conductive ceramic sintered body according to the present invention is stable with respect to metallic lithium. Thus, in the case where the first protective layer 216 and the second protective layer 217 are formed of the lithium-ion-conductive ceramic sintered body according to the present invention, when at least one of the cathode layer 212 and the anode layer 213 contains a lithium component, reaction between lithium and a material forming the solid electrolyte layer 211 is suppressed, and whereby redox-induced deterioration of the solid electrolyte layer 211 can be suppressed.

The solid electrolyte layer 211 may be formed from the same material of the solid electrolyte layer 11 of the first embodiment. Since the complete-solid battery 210 of the second embodiment has the protective layers 216, 217, the solid electrolyte layer 211 may be formed from a material which is more reactive to an electrode component, as compared with the lithium-ion-conductive ceramic sintered body according to the present invention. That is, examples of the material of forming the solid electrolyte layer 211 include a NASICON-type lithium aluminum titanium phosphate complex oxide, a lithium aluminum germanium phosphate complex oxide, and a perovskite-type lithium lanthanum titanium complex oxide.

The complete-solid battery 210 includes the protective layers 216, 217 which are formed of the lithium-ion-conductive ceramic sintered body according to the present invention. The lithium-ion-conductive ceramic sintered body according to the present invention is difficult to react with the lithium component and exhibits high ion conductivity. Thus, the complete-solid battery 210 exhibits high capacity and high output.

The first protective layer 216 and the second protective layer 217 may be produced through the same method of producing the aforementioned lithium-ion-conductive ceramic sintered body. The first collector member 214, the cathode layer 212, the first protective layer 216, the solid electrolyte layer 211, the second protective layer 217, the anode layer 213, and the second collector member 215 are sequentially stacked in this order, and the stacked body is pressed at a specific pressure in a sandwich manner, to produce the complete-solid battery 210.

Notably, the complete-solid battery 210 may be produced through a method other than the aforementioned procedure. Examples of such a production method include stacking the cathode layer 212, the first protective layer 216, the solid electrolyte layer 211, the second protective layer 217, and the anode layer 213 in this order and an unfired state, and simultaneously firing the stacked body; baking the first protective layer 216 and the second protective layer 217 to bond to the fired solid electrolyte layer 211 in the form of plate, and then baking to bond the cathode layer 212 on the first protective layer 216 side, and the anode layer 213 on the second protective layer 217 side; and baking, under pressing, the protective layers 216, 217 to bond to the solid electrolyte layer 211 in the form of plate, and the electrodes 212, 213 to bond to the protective layers 216, 217 (i.e., a hot-press method).

The lithium battery according to the present invention contains a lithium component in the cathode layer and/or the anode layer and includes a primary battery and a secondary battery. Thus, the embodiment of the lithium battery according to the present invention is not limited to the aforementioned complete-solid batteries 10 and 210 as lithium ion batteries. Alternatively, the embodiment may include a lithium-air battery in which the anode active material is metallic lithium, and the cathode active material is oxygen. Notably, the lithium component in the cathode layer and/or the anode layer may be metallic lithium, a lithium alloy, or a lithium compound.

The lithium battery according to the present invention is not limited to the aforementioned embodiments. Those skilled in the art can perform various modifications, so long as the objects of the present invention can be attained.

In the complete-solid battery 210 of the second embodiment, the first protective layer 216 and the second protective layer 217 are disposed on the respective surfaces of the solid electrolyte layer 211. However, it may be the case only one of the first protective layer 216 and the second protective layer 217 is provided. Also, in the complete-solid battery 210 of the second embodiment, the first protective layer 216 and the second protective layer 217 which are disposed on the respective surfaces of the solid electrolyte layer 211 are formed of the lithium-ion-conductive ceramic sintered body according to the present invention. However, it may be the case only one of the first protective layer 216 and the second protective layer 217 is formed of the lithium-ion-conductive ceramic sintered body according to the present invention.

Also, no particular limitation is imposed on the forms of the complete-solid batteries 10 and 210 of the first and second embodiments. The forms of the battery include various forms such as coin, cylinder, square, box, and laminate.

### Examples

### [Production of lithium-ion-conductive ceramic sintered body]

Powder-form raw materials of Li₂CO₃, MgO, La(OH)₃, SrCO₃, and ZrO₂ were weighed in the following manner. Specifically, Li₂CO₃ was added in a 10 mol% Li-excess amount, with respect to 1 mol of a theoretical composition: Li_{6.95}Mg_{0.15}La_{2.75}Sr_{0.25}Zr_{2.0}O₁₂, which is a crystalline compound having a garnet-type crystal structure to be formed via sintering. Subsequently, as shown in Table 1, MgO and ZrO₂ were further added such that the Mg amount and the Zr amount were to be 0 to 20 mol% excess. The thus-weighed powder mixture was put into a pot made of Nylon with zirconia balls, and the mixture was pulverized by means of a ball mill with ethanol for 15 hours. The product was dried, to yield a material mixture.

The thus-obtained material mixture was placed on an MgO plate and calcined at 1,100°C for 10 hours, to yield a calcined material. A binder was added to the calcined material, and the mixture was subjected to pulverization by a ball mill in an organic solvent for 15 hours, and the product was further dried, to produce an unfired material. The unfired material was put into a metal mold having a diameter of 12 mm, and press-molded so as to have a product thickness of about 1.5 mm. The molded product was pressed at an isostatic pressure of 1.5 t/cm² by means of a cold isostatic pressing (CIP) machine, to form a compact. The compact was covered with a calcination powder having the same composition as that of the compact and fired at 1,200°C in a nitrogen atmosphere for 4 hours, to yield lithium-ion-conductive ceramic sintered body samples 1 to 5.

### [SEM observation of lithium-ion-conductive ceramic sintered body]

Each of samples 1 to 5 was cut to expose a cut surface, and the cut surface was polished. The polished surface was observed under a scanning electron microscope (SEM), and some images were taken (×500). Fig. 4 shows the results. In the sintered body of sample 1 shown in Fig. 4(a), a large number of coarse pores (3) were observed, and no crystal phase other than a main crystal phase 1 was observed. In the sintered bodies of samples 2 to 5 shown in Figs. 4(b) to 4(e), a second crystal phase (2) formed of small particles was dispersed in the first crystal phase (1), which is a main crystal phase, and a part of the second crystal phase (2) was present so as to fill the pores provided in the first crystal phase (1).

Notably, in Fig. 4, (b) is a SEM image of sample 2, (c) is a SEM image of sample 3, (d) is a SEM image of sample 4, and (e) is a SEM image of sample 5.

Also, the total area of the second crystal phase (2) in the SEM image was determined through the aforementioned measurement from SEM images (×1,000) taken at 5 arbitrarily chosen sites. Subsequently, the ratio of the total area of the second crystal phase (2) to the total area of the SEM image was calculated. The arithmetical mean of the five calculated area ratios was obtained. Table 1 shows the results. As shown in Table 1 and Fig. 4, the second crystal phase (2) area ratio increased, as the amount of excess Mg or Zr increased.

Separately, SEM images (×1,000) were taken at 5 arbitrarily chosen sites, and the total area of coarse pores (3) having a maximum size of 10 µm or more was determined through the same method as employed in the determination of the area of the second crystal phase, to calculate the ratio of the total area of the coarse pores (3) with respect to the total area of the SEM images. The arithmetical mean of the calculated area ratios was obtained. Table 1 shows the results. As shown in Table 1 and Fig. 4, the coarse pore (3) ratio decreased, as the amount of excess Mg or Zr increased.

The aforementioned coarse pores are conceived to be formed during a firing step via vaporization of Li. Since the area of the coarse pores decreases with an increase in the area of the second crystal phase, the second crystal phase is conceived to play a role in suppressing vaporization of Li.

### [XRD analysis of lithium-ion-conductive ceramic sintered body]

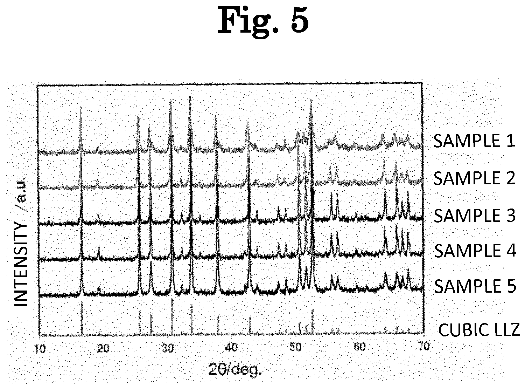

A powder obtained by crushing each of the sintered bodies of samples 1 to 5 was analyzed by means of an X-ray diffractometer (XRD), to obtain an X-ray diffraction pattern. Fig. 5 shows the thus-obtained X-ray diffraction patterns, with reference to a related ICDD card. As shown in Fig. 5, the sintered bodies of samples 1 to 5 were found to coincide substantially with the ICDD card of cubic LLZ. Therefore, the sintered bodies of samples 1 to 5 were found to include crystals having a garnet-type or a garnet-like crystal structure.

### [TEM-EDS analysis of lithium-ion-conductive ceramic sintered body]

The aforementioned polished surface of each of samples 1 to 5 was analyzed by means of an energy dispersive X-ray spectrometer (EDS) attached to a transmission electron microscope (TEM). Specifically, the first crystal phase-a main crystal phase having the maximum surface area in the polished surface-was subjected to element analysis through EDS. As a result, the presence of Mg, La, Sr, Zr, and O, which were the added components as the raw material, was detected. In addition, the second crystal phase, which was formed of particles dispersed in the first crystal phase, was subjected to element analysis through EDS. As a result, the presence of Mg, Zr, and O was detected.

Separately, the second crystal phase formed of particles was irradiated with an electron beam, to obtain an electron beam diffraction pattern. As a result, the second crystal phase was confirmed to be in a crystalline state.

### [TOF-SIMS analysis of lithium-ion-conductive ceramic sintered body]

The aforementioned polished surface of each of samples 1 to 5 was subjected to Li mapping through time-of-flight secondary ion mass spectrometry (TOF-SIMS). As a result, each of the first crystal phase and the second crystal phase was found to contain Li.

### [Relative density of lithium-ion-conductive ceramic sintered body]

The relative density of the sintered bodies of samples 1 to 5 was measured in the aforementioned manner. The relative density was obtained from the measured density and the theoretical density. As a result, all the sintered body samples were found to have a relative density of 85% or higher.

### [Ion conductivity]

Specific resistance and ion conductivity of each of samples 1 to 5 were determined. In a specific procedure, each main surface of each sample was polished, and the polished surface was coated with gold through sputtering. Specific resistance and ion conductivity of samples 1 to 5 were determined at room temperature through the AC impedance method by means of a multi-stat (1470E, product of Solartron) connected to a frequency-responsive analyzer (1255B, product of Solartron). Notably, the determined resistance R (specific resistance) is defined by the sum of intra-grain resistance ra and grain boundary resistance rb (R = ra + rb). Ion conductivity Ic is the reciprocal of resistance R (Ic = 1/R). Table 1 shows the results.

**[Table 1]**

| Sample No. | Excess Mg, Zr amount (mol%) | Area ratio of second crystal phase (%) | Area ratio of coarse pores (%) | Ion conductivity (S/cm) |
|---|---|---|---|---|
| 1 | 0 | 0 | 9.2 | 5.7 × 10⁻⁴ |
| 2 | 1 | 0.5 | 7.0 | 1.2 × 10⁻³ |
| 3 | 5 | 1.5 | 7.4 | 1.0 × 10⁻³ |
| 4 | 10 | 2.7 | 2.3 | 1.1 × 10⁻³ |
| 5 | 20 | 4.3 | 1.7 | 8.4 × 10⁻⁴ |

As shown in Table 1, lithium-ion-conductive ceramic sintered body samples 2 to 5, which fall within the scope of the present invention, exhibited high ion conductivity of 8.4 × 10⁻⁴ S/cm or higher. In contrast, the lithium-ion-conductive ceramic sintered body sample 1, which falls outside the scope of the present invention and included no second crystal phase, exhibited a lower ion conductivity, as compared with the ion conductivity of samples 2 to 5.

All the sintered body samples 2 to 5 had a second crystal phase containing Li, Mg, Zr, and O. Therefore, by virtue of the second crystal phase, volatilization of Li in the first crystal phase was conceivably prevented by volatilization of Li atoms preferentially from the second crystal phase during firing, and whereby the ion conductivity was higher than that of sintered body sample 1. Also, a part of the second crystal phase was present so as to fill the coarse pores. Therefore, Li ion mobility was conceivably enhanced in the case where the coarse pores were filled with the second crystal phase, as compared with the case of vacant coarse pores, and whereby the ion conductivity was higher than that of sintered body sample 1.

Also, samples 2 to 4, having a second crystal phase area ratio of 0.5% to 3%, had a ratio of the second crystal phase to the first crystal phase falling within the most preferred range. Thus, the ion conductivity thereof was higher than that of samples 1 and 5.

In the case where a solid electrolyte layer or a protective layer of a lithium battery was formed from any of lithium-ion-conductive ceramic sintered body samples 2 to 5 exhibiting high ion conductivity, the internal resistance of the lithium battery can be reduced, and a lithium battery having high-capacity and high output can be provided.

### (Example of lithium-ion-conductive ceramic body)

Samples of the lithium-ion-conductive ceramic body were produced and subjected to evaluations. Table 2 shows the results.

**[Table 2]**

| Sample No. | Polishing step | Thickness of coating layer (µm) | L2/L1 | Ion conductivity (S/cm) |
|---|---|---|---|---|
| 11 | presence | 3 | 97.6 | 1.2 × 10⁻³ |
| 12 | absence | 5.2 | 93.7 | 7.4 × 10⁻⁴ |

### (Production of lithium-ion-conductive ceramic body)

Powder-form raw materials of Li₂CO₃, MgO, La(OH)₃, SrCO₃, and ZrO₂ were weighed in the following manner. Specifically, Li₂CO₃ was added in a neighborhood of 10 mol% Li-excess amount in an element basis, with respect to 1 mol of a theoretical composition: Li_{6.95}Mg_{0.15}La_{2.75}Sr_{0.25}Zr_{2.0}O₁₂, which is a crystalline compound having a garnet-type crystal structure to be formed via sintering, in consideration of volatilization of Li during firing. Subsequently, Mg and Zr were mixed in an excess amount such that the second crystal layer is deposited. The thus-weighed powder mixture was put into a pot made of Nylon with zirconia balls, and the mixture was pulverized by means of a ball mill with an organic solvent for 15 hours. The product was dried, to yield a material mixture.

The thus-obtained material mixture was placed on an MgO plate and calcined at 1,100°C for 10 hours, to yield a calcined material. A binder was added to the calcined material, and the mixture was subjected to pulverization by a ball mill in an organic solvent for 15 hours, and the product was further dried, to produce an unfired material. The unfired material was put into a metal mold having a diameter of 12 mm, and press-molded so as to have a product thickness of about 1.5 mm. The molded product was pressed at an isostatic pressure of 1.5 t/cm² by means of a cold isostatic pressing (CIP) machine, to form a compact. The compact was fired at 1,200°C in a nitrogen atmosphere for 4 hours, to yield a lithium-ion-conductive ceramic sintered body. The obtained lithium-ion-conductive ceramic sintered body is exposed to the atmosphere to form a coating layer of lithium carbonate (Li₂CO₃) on a surface of the lithium-ion-conductive ceramic sintered body. Accordingly, a lithium-ion-conductive ceramic body including a lithium-ion-conductive ceramic sintered body and a coating layer was obtained.

Finally, a surface of the lithium-ion-conductive ceramic body is polished with abrasive papers to obtain a lithium-ion-conductive ceramic body sample 11. In addition, a lithium-ion-conductive ceramic body sample 12 was obtained by the same production method as the sample 11 (here, the final polishing step is not polished).

### [Observation of coating layer]

Cross-sections of the samples 11, 12, which were obtained by CP processing (cross-section polisher processing, and ion milling processing), were subjected to element mapping with time-of-flight secondary ion mass spectrometry (TOF-SIMS). As a result, Li and CO₃ were found to exist in a surface of LLZ-MgSr as a lithium-ion-conductive ceramic sintered body, and a layer of lithium carbonate (Li₂CO₃) as a coating layer was found to exist in the surface of LLZ-MgS. The cross-sections of the samples 11, 12 were observed with a scanning electron microscope (SEM). As a result, the thickness of the coating layer in the sample 11 was 3 µm, and the thickness of the coating layer in the sample 12 was 5.2 µm. The thickness of the coating layer is a value calculated as the mean of thicknesses of surfaces of LLZ-MgS in arbitrarily chosen 5 sites in the cross-section of each sample in a normal line direction.

### [Observation of lithium-ion-conductive ceramic sintered body]

The cross-sections of the samples 11, 12 obtained by the CP processing were subjected to a scanning electron microscope (SEM) to obtain backscattered electron images, and the backscattered electron images were observed at 1,000×. Subsequently, the ratio (L2/L1) of a total length L2 of a line segment connecting only valley points VP to a total length L1 of a line segment connecting a peak point MP and a valley point VP alternately on the surface of the lithium-ion-conductive ceramic sintered body was calculated. In the sample 11, the ratio (L2/L1) was 97.6, and in the sample 12, the ratio (L2/L1) was 93.7. The ratio (L2/L1) is a value calculated as the mean of the ratios of five backscattered electron images by observing backscattered electron images of arbitrarily chosen 5 sites in a cross-section of each sample, which is obtained by the scanning electron microscope (SEM).

### [Ion conductivity]

Gold deposition was performed on each main surface of each of the samples 11, 12 to prepare a sample for measurement. The ion conductivity of each sample for measurement was measured at room temperature according to an AC impedance method. A multi-stat (1470E, product of Solartron) connected to a frequency-responsive analyzer (1255B, product of Solartron) was used for the measurement. The sample using the sample 11 exhibited high ion conductivity of 1.2×10⁻³ S/cm. In contrast, the sample using the sample 12 exhibited ion conductivity of 7.4×10⁻⁴ S/cm, which was lower than that of the sample using the sample 11.

Since the thickness of the coating layer exhibiting very low lithium ion conductivity in the sample 12, the lithium ion conductivity of the lithium-ion-conductive ceramic body was decreased due to the presence of the coating layer. In contrast, since the thickness of the coating layer is 3 µm or smaller in the sample 11, a decrease in lithium ion conductivity of the lithium-ion-conductive ceramic body due to the presence of the coating layer can be inhibited.

Since the ratio (L2/L1) is less than 0.95 in the sample 12, the number of uneven parts on the surface of the lithium-ion-conductive ceramic sintered body is relatively large, and the amount of non-contact points between the lithium-ion-conductive ceramic sintered body and the electrode is increased, resulting in a decrease in lithium ion conductivity between them. In contrast, since the ratio (L2/L1) is 0.95 or greater in the sample 11, the number of uneven parts on the surface of the lithium-ion-conductive ceramic sintered body is relatively small, and the amount of non-contact points between the lithium-ion-conductive ceramic sintered body and the electrode is reduced, resulting in an increase in the lithium ion conductivity between them.

When the lithium-ion-conductive ceramic body of sample 11 exhibiting high ion conductivity is used as a solid electrolyte layer or a protective layer in a lithium battery, the internal resistance of the lithium battery can be reduced, and the provided lithium battery exhibits high capacity and high output.

### Reference Signs List

10, 210 complete-solid battery
11, 211 solid electrolyte layer
12, 212 cathode layer
13, 213 anode layer
14, 214 first collector member
15, 215 second collector member
216 first protective layer
217 second protective layer
100 lithium-ion-conductive ceramic body
110 Lithium-ion-conductive ceramic sintered body
120 coating layer

## Claims

1. A lithium-ion-conductive ceramic material comprising:
a first crystal phase containing Li and having a garnet-type or garnet-like crystal structure; and
a second crystal phase containing Li, Mg, Zr, and O,
wherein in a predetermined area of at least one cross-section of the lithium-ion-conductive ceramic material, a ratio (L2/L1) of a total length L2 of a line segment connecting only valley points on a surface of the lithium-ion-conductive ceramic material to a total length L1 of a line segment connecting a peak point and the valley point alternately on the surface of the lithium-ion-conductive ceramic material is equal to or greater than 0.95 and smaller than 1.

2. The lithium-ion-conductive ceramic material according to claim 1,
wherein the first crystal phase contains Li, La, Zr, and Mg.

3. The lithium-ion-conductive ceramic material according to claim 1 or 2,
wherein the first crystal phase contains Li, La, Zr, Mg, and element A (the element A is at least one element selected from a group consisting of Ca, Sr, and Ba).

4. The lithium-ion-conductive ceramic material according to claim 3,
wherein the element A is Sr.

5. The lithium-ion-conductive ceramic material according to any one of claims 1 to 4,
wherein the second crystal phase is contained in a cross-section of the lithium-ion-conductive ceramic material in a proportion of 10 area% or less.

6. A lithium-ion-conductive ceramic body, comprising:
the lithium-ion-conductive ceramic material according to any one of claims 1 to 5; and
a coating layer having a thickness of 3 µm or less, which is formed on a surface of the lithium-ion-conductive ceramic material, and which contains Li, C, and O.

7. A lithium battery, comprising:
the lithium-ion-conductive ceramic material according to any one of claims 1 to 5,
wherein the lithium-ion-conductive ceramic material is a protective layer disposed in a solid electrolyte layer or between a solid electrolyte layer and an electrode.

8. A lithium battery, comprising:
the lithium-ion-conductive ceramic body according to claim 6,
wherein the lithium-ion-conductive ceramic body is a protective layer disposed in a solid electrolyte layer or between a solid electrolyte layer and an electrode.
